# EUROPEAN PATENT SPECIFICATION

(11) **EP 0 488 738 B1**
(45) Date of publication and mention of the grant of the patent: **05.08.1998**
(21) Application number: 91311028.4
(22) Date of filing: 28.11.1991
(51) Int. Cl.: G03B 27/58, G03C 3/00

(54) **Roll-shaped package with light sensitive material**
Rollenförmige Verpackung mit lichtempfindlichem Material
Emballage de matériau photosensible en forme d'un rouleau

(30) Priority: 30.11.1990 JP 130723/90
(43) Date of publication of application: 03.06.1992
(73) Proprietor: KONICA CORPORATION, Tokyo 163 (JP)
(72) Inventor: Naraoka, Naohito, Odawara-shi, Kanagawa-ken (JP); Iketani, Haruyoshi, Odawara-shi, Kanagawa-ken (JP); Tamura, Junichi, Odawara-shi, Kanagawa-ken (JP)
(74) Representative: Ben-Nathan, Laurence Albert

(56) References cited:
- EP-A- 230 057
- EP-A- 414 265
- WO-A-80/01960
- FR-A- 2 497 771
- US-A- 3 038 811
- US-A- 4 505 387
- "CRC Handbook of Chemistry and Physics", Ed. R C Weast; CRC Press Inc., Florida, USA, 59th ed., 1978-1979; pages C-782 and C-785

## Description

### FIELD OF THE INVENTION

This invention relates to a package for a light sensitive material such as a film or paper for photographic, graphic arts or scanner use which is wrapped around a core in the package and particularly to a package for a room-light-loading type light sensitive material, which can be used by setting the package in a light-proof leader such as a light-proof cartridge under room light and then by removing the leader.

### BRIEF DESCRIPTION OF THE DRAWINGS

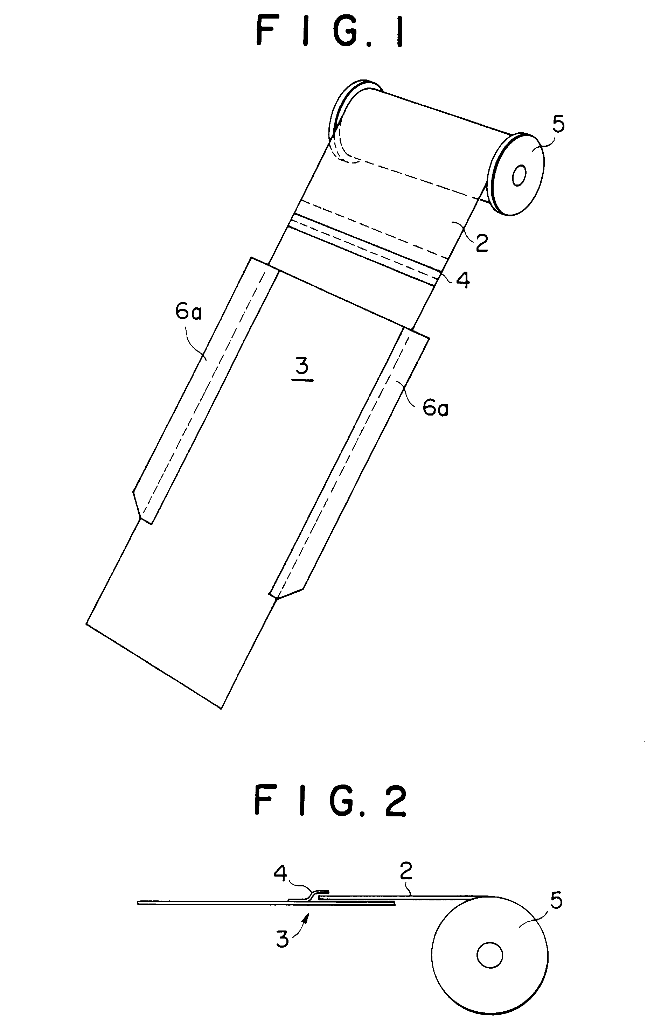

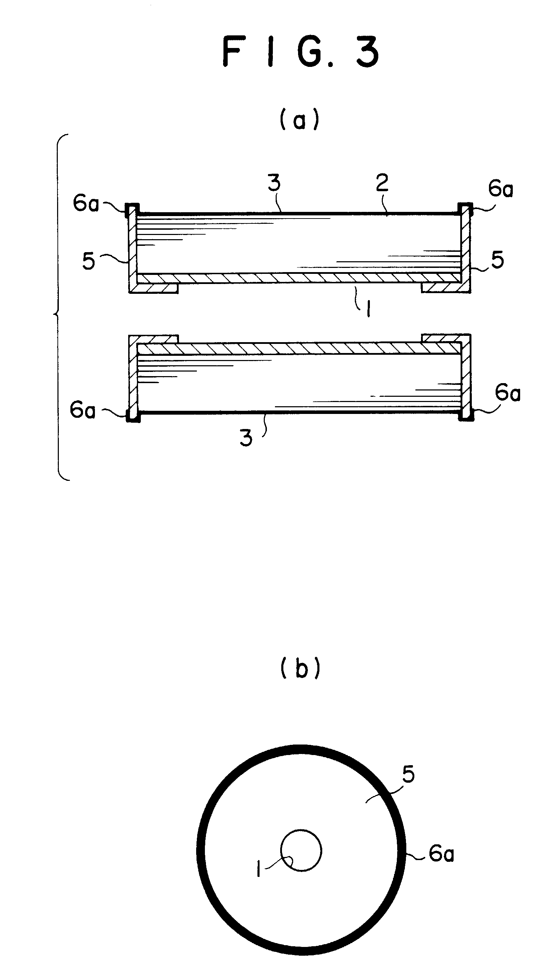

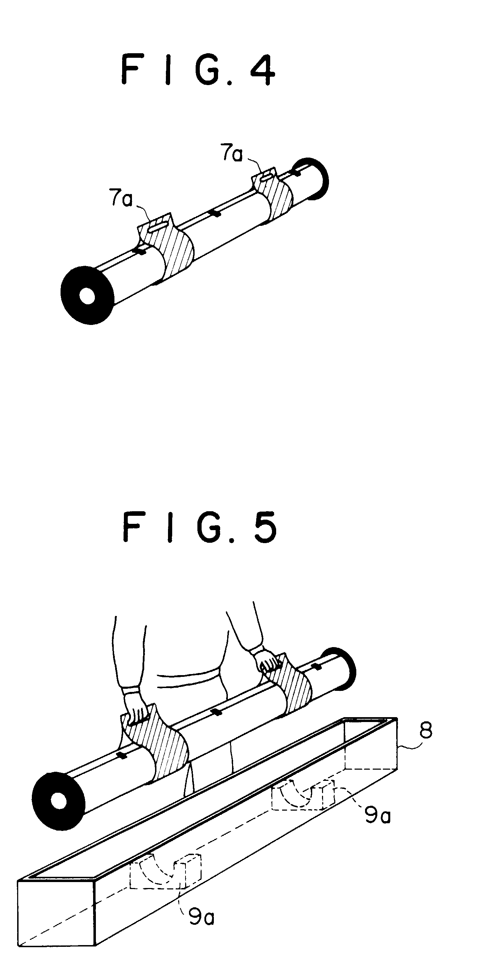

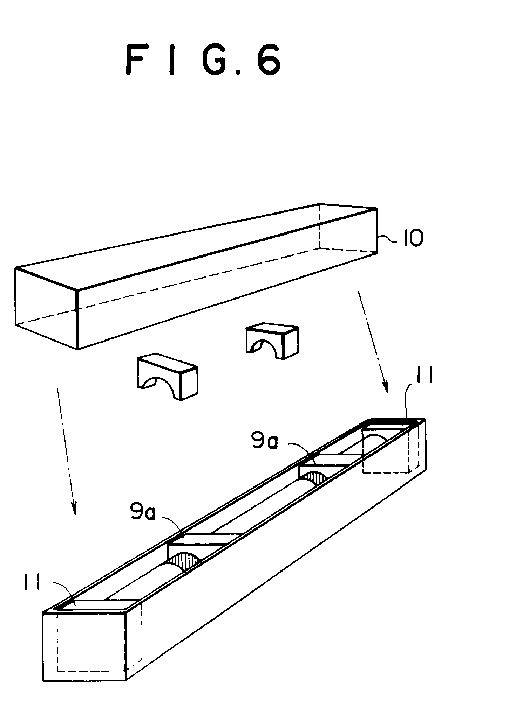

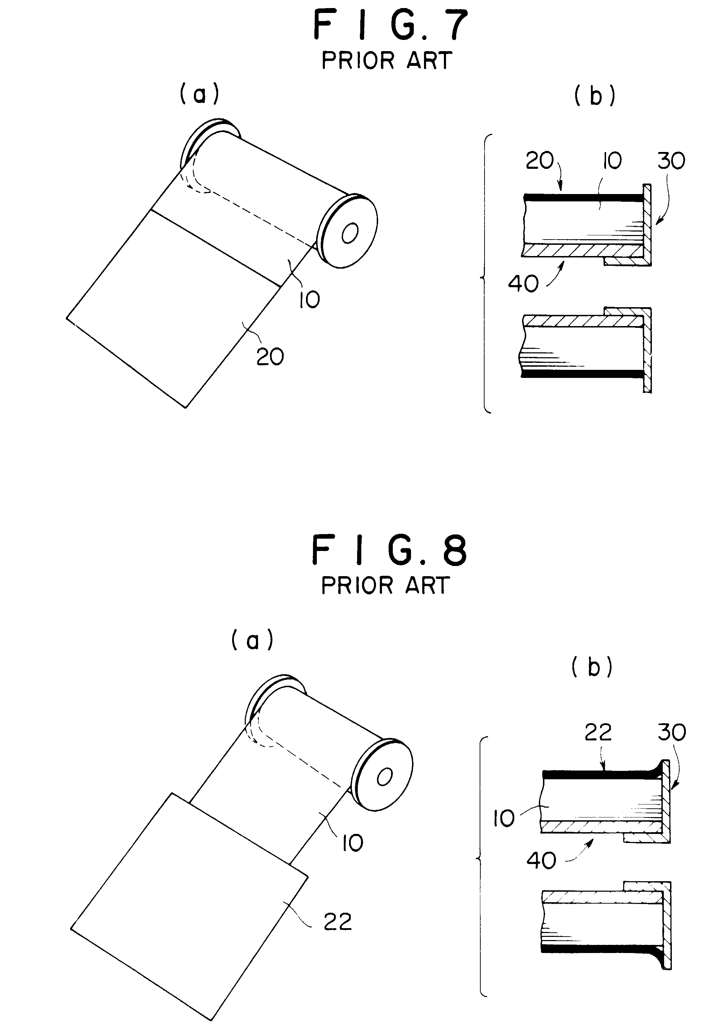

Figs. 1 through 6 illustrate each one of the embodiments of a roll-shaped light sensitive material relating to the invention, among which Fig. 1 is a perspective view of the light sensitive material; Fig. 2 is the side view thereof; Fig. 3(a) is the vertical cross-sectinal view thereof; Fig. 3(b) is the end view thereof; Fig. 4 is a perspective view of a package for a large-sized roll-shaped light sensitive material; and Figs. 5 and 6 are each the illustration showing the packaging conditions thereof; and Figs. 7 through 14 are each the illustration of conventional packages for roll-shaped light sensitive materials; wherein
1 ... Core; 2 ... Light sensitive material;
3 ... Leader; 4 ... adhesive tape; 5 ... Flange;
6a ... Sheet; 7a ... Handle; 8 ... Outer box;
9a ... Elastic pad; 10 ... Upper lid;
11 ... Pad

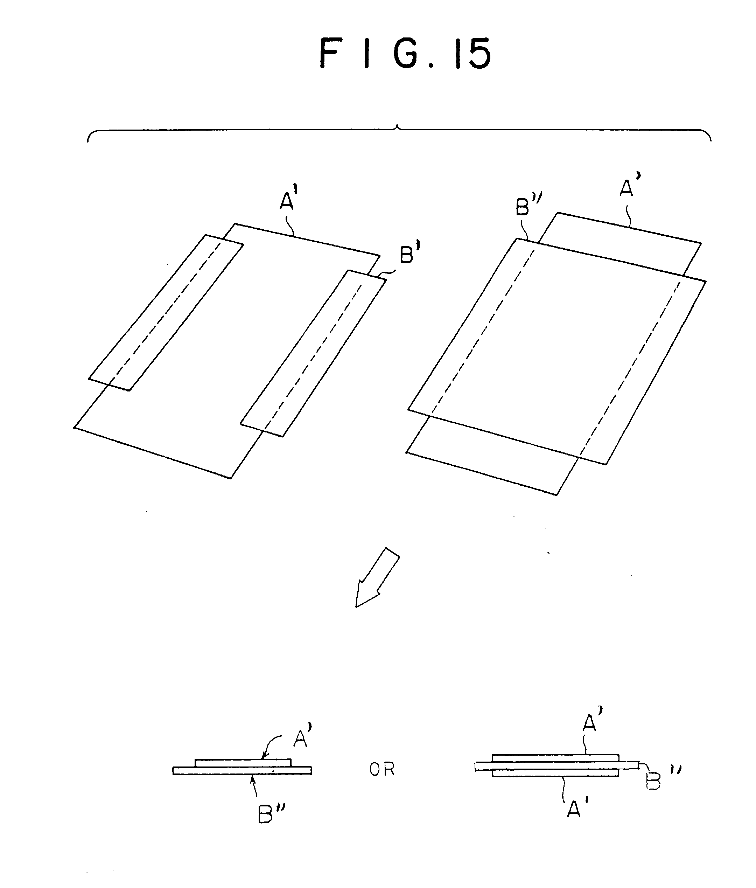

Fig. 15 is the illustration of the leader part of the light sensitive material showing combination of the non-elastic material and the elastic material.

### BACKGROUND OF THE INVENTION

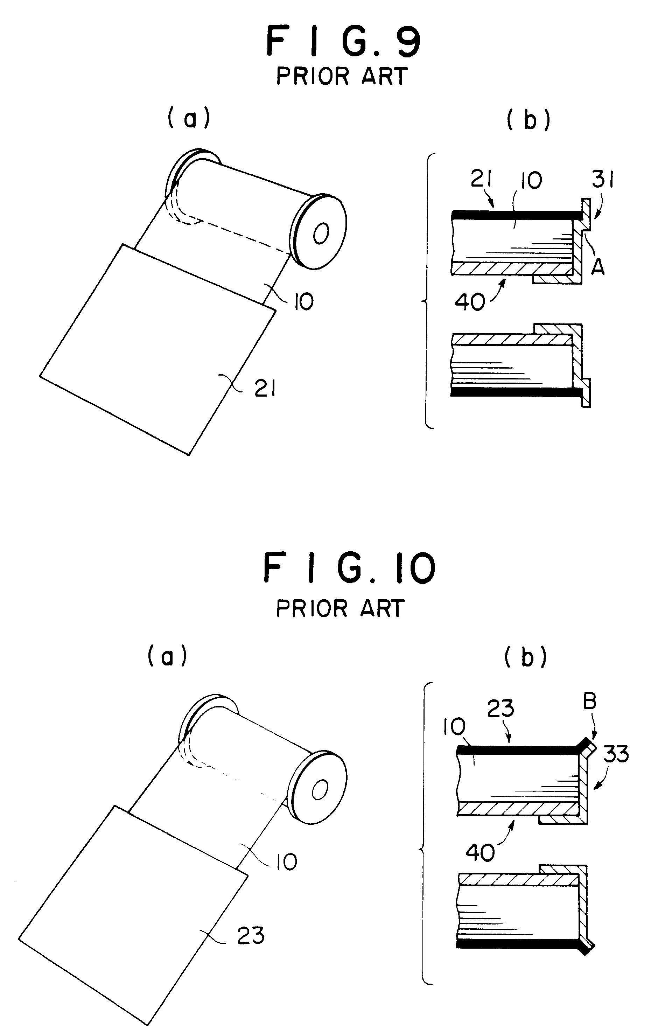

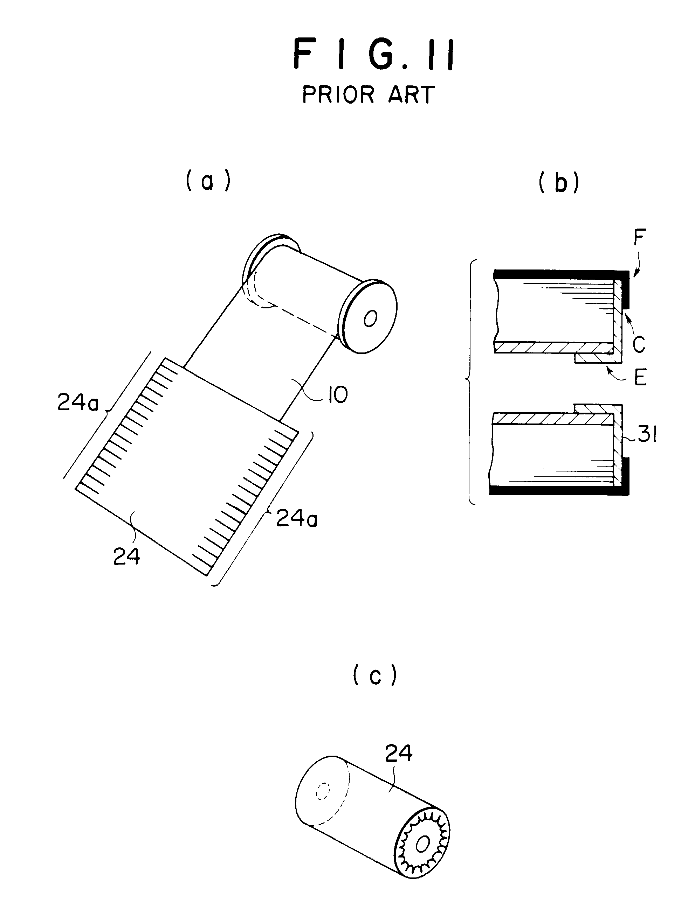

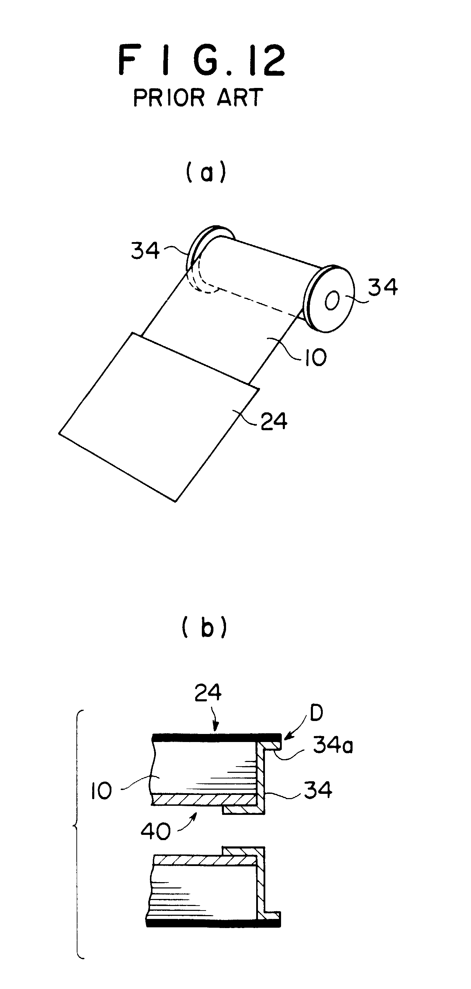

There have so far been the following conventional light sensitive materials; namely, a light sensitive material wrapped around core 40, as shown in Figs. 7(a) and 7(b), which has one each of light-proof flanges 30 provided to the both ends thereof and light-proof leader 20 is so connected as to have the same width as that of light sensitive material 10 as shown in Fig. 7(a), so that light sensitive material 10 may be wrapped around so as to be in the relational position as shown in the cross-sectional view illustrated in Fig. 7(b); a light sensitive material connected with wide leader 22 to the ends thereof and so wrapped around as to bend the both ends of wide leader 22 toward flanges 30, as shown in Figs. 8(a) and 8(b); a light sensitive material connected with leader 21 having a width wider than that of the light sensitive material and provided to the portion facing the circumferential edge of flange 31 with level difference A capable of absorbing the both side portions of widened leader 21, as shown in Figs. 9(a) and 9(b), (See Japanese Utility Model Application No. 58-195813/1983 and Japanese Utility Model Application Open to Public Inspection No. 1-115737/1989); a light sensitive material having leader 23 wider than that of light sensitive material 10, flange 33 whose outer circumference is slanted toward the outside and portion B connected with the both sides of leader 23, as shown in Figs. 10(a) and 10(b), (See Japanese Patent Publication Open to Public Inspection -hereinafter referred to as JP OPI Publication- No. 62-172344/1987); a light sensitive material comprising leader 24 having both sides wider than that of the light sensitive material and attached with notched portion 24a to the wide portions so as to bend notched portion 24a toward the outside of flange 31, as shown in Figs. 11(a), 11(b) and 11(c), (See Japanese Utility Model Examined Publication No. 1-38582/1989), (or, it is also allowed that a considerably longer notched portion 24a is provided to the both sides of leader 24 so that portion 24a can be so bent as to extend to portion E of flange 31.); and a light sensitive material comprising leader 24 having the both sides wider than that of light sensitive material 10 and flange 34 forming a flat portion 34a extruded laterally on the outer circumferential portion of flange 34, so that the wide portion of leader 24 is connected to flat portion 34a, as shown in Figs. 12(a) and 12(b), (See Japanese Utility Model Publication Open to Public Inspection No. 63-6452/1988).

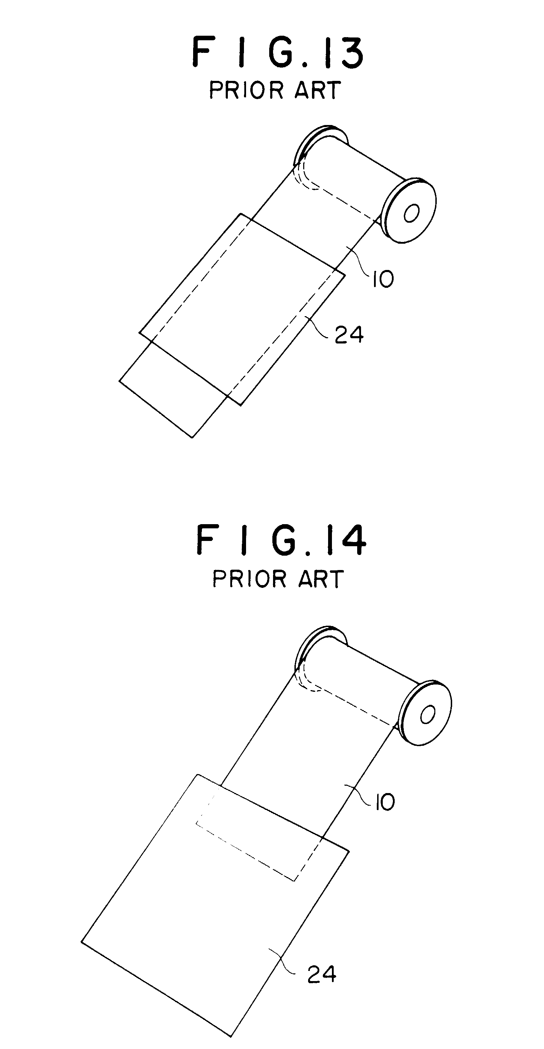

In the above-described constitution, leader 24 is arranged to the leading end of light sensitive material 10. However, it is also allowed that leader 24 may be connected to the mid position as shown in Fig. 13, that it may not be connected face to face as shown in Fig. 14, that portions A, B, C and D shown in Figs. 9, 10, 11 and 12 may or may not be connected, respectively.

In the constitution shown in Fig. 7, in the meantime, the widths of leader 20 and light sensitive material 10 are the same with each other. However, if the width of leader 20 is even a little bit narrower than that of light sensitive material 10 or if both of the leader and the light sensitive material are shifted out of the positions, there may most likely be some instances where light may be leaked from the shifted edges. On the contrary, if the width of leader 20 is too wider, there may be some instances where a wrinkle may be produced around a corner when wrapping leader 20 around, or where a bulge may be produced on only one side and a shifting may be produced on the other side, so that light may be leaked, as in the constitution shown in Fig. 8.

In the constitution disclosed in Fig. 8, it is too hard to bulge the both sides of leader 22 uniformly, because a wrinkle is produced and the leader is put aside. Therefore, a light-leakage is caused.

In the constitutions shown in Figs. 9, 10 and 12, the possibility of light leakage is smaller than in the constitutions shown in Figs. 7 and 8 though, it is still hard to wrapping around uniformly the both sides of each leader 21, 23 and 24 without making any wrinkle.

As shown in Figs. 9, 10 and 12, portions A, B and D are each desirable to be connected. In this case, however, there still have a problem that too many processes should be carried out.

In the case that no connection is made and core 40 is made of an elastic member such as a sheet of paper, core 40 may move apart from flanges 31, 33 and 34 so as to leak light from the edge portions of leaders 21, 23 and 24, and in this case, there may be some possibility to make leaders 21, 23 and 24 out of their positions so as to cause light-leakages, respectively.

The constitution shown in Fig. 11 is better than the constitutions shown in Figs. 7 through 10 and Fig. 12. However, when leader 24 has notched portion 24a or is bent, or when portion C or E is fixed, there is a high possibility that the bent portions may be cut apart. Therefore, the constitution shown in Fig. 11 is still not desirable.

US-A-4505387 and EP-A-0230057 each describes a roll-shaped package having projecting portions of the light shielding cover of the film roll extending respectively over the outside surface of the flanges and over a folded peripheral portion of the inside surface of the flanges.

### SUMMARY OF THE INVENTION

It is, therefore, an object of the invention to provide a package for roll-shaped light sensitive materials, which is capable of solving the above-mentioned various problems at the same time.

The invention provides a roll-shaped package in accordance with Claim 1.

### DETAILED DESCRIPTION OF THE INVENTION

When making use of the above-mentioned package for light sensitive material, a light-leakage, which may be produced when the leader is narrow in width, can be prevented without raising any problems of wrinkles and snake-like running in wrapping the leader around and, in the state where the flange and the leader are not connected together, the leader can be so stable that it can neither be shifted off nor be destroyed even if any external force is applied to the leader.

### PREFERRED EMBODIMENT

Figs. 1 through 6 illustrate embodiments of the packages for roll-shaped light sensitive materials relating to the invention. Among the figures, Fig. 1 is a perspective view of a package for a roll-shaped light sensitive material; Fig. 2 is a side view of that shown in Fig. 1; Fig. 3(a) is a vertical cross-sectional view thereof; Fig. 3(b) is an end view thereof; Fig. 4 is a perspective view of a package for a large-sized roll-shaped light sensitive material; and Figs. 5 and 6 are each the illustrations of packaging conditions.

As shown in Figs. 1 and 2, leader 3 was fixed by making use of adhesive tape 4 to the tail end of a light sensitive material 2 rollwise wrapped around

Flanges 5 were each attached to the both ends of core 1 so that the flanges could cover the both side-edges of light sensitive material 2 rollwise wrapped around.

Flexible sheets 6a were attached to the both side-edges of leader 3.

Flexible sheets 6a were so constituted that they had a length enough to wrap around the outer circumferences of flanges 5 one or more rounds and that they had a width enough to wrap around the flanges 5 upon bending them outward in such a state where they covered straddling the outer circumferences of flanges 5.

Further, as shown in Fig. 3, leader 3 was wrapped around the outside of light sensitive material 2 and sheets 6a were so provided as to cover the outermost circumferences of flanges 5.

In the above described construction, flexible resin sheets are used for sheets 6a. Accordingly, the sheets 6a have a satisfactory fitness or a wrapping property to flange 5 even if any connection is not especially applied and, resultingly, the wrapping condition of the sheet 6a could not readily be deformed even if any external forces are applied thereto, further, the external forces may be satisfactorily absorbed and weakened so that the wrapping condition by the sheets 6a may not be destroyed.

Flexible sheets 6a are connected to the both ends of leader 3. Therefore, the width of the leader part 3 and 6a is wider than that of light sensitive material 2 so as not to leak light from the edges of light sensitive material 2.

When at least a part of each flexible sheets 6a is caught in flange 5, any snake-like running can be prevented and any unbalance of a tension cannot be applied to a web because of the elasticity, so that any wrinkles can hardly be produced.

There is no special limitation to the materials of core 1 which is to wrap light sensitive material 2 therearound.
Therefore, plastics, natural paper and synthetic paper, for example, may be used for and, besides, laminates comprising a moisture-proof film, a metal foil or a metal-evaporated film may also be used for. The above-mentioned natural paper include, for example, a virgin or waste pulp paper and reclaimed paper. Besides the above, it is also allowed to use cushiony materials comprising a polyurethane foam, a foam polyethylene sheet or a foam polyethylene paper each laminated as a part of the material. The above-mentioned raw materials are to be synthetically selected by giving consideration to the strength, a moisture-proof, an elasticity, a slidability of surfaces and the innermost surface and a cushion property, as well as from the viewpoints of the pressure applied to the ends of a light sensitive material, the absorption of the pressure applied by the unevenness of the surface of a core or the production cost.

There is also no special limitation to the raw materials of flange 5. Flanges 5 have usually been those molded of the materials prepared by adding an additive such as a light-proofing material into a thermoplastic resin such as polystyrol, polyethylene and polypropylene.

As for the leader parts, they may be any one of those comprising two kinds of materials such as leader 3 and sheets 6a in combination or united in a body, as shown in Fig. 1.

The materials of leaders 3 are required to be light-proof. The materials may also be those added by a strength or moisture-proofing property, if required, and they may further be sheets including, for example, a natural paper, a moisture-proof film such as those made of polyethylene, nylon or PET, a metal-foil or metal-evaporated film, or the laminates of several kinds of the above-given materials.

The leader parts may be comprised of sheet 6a and leader 3 united in a body as mentioned above. When leader 3 is not elastic, sheet 6a is desirably comprised of a light-proof and elastic resin film after the non-elastic leader 3 is separated from the sheet 6a, as shown in Fig. 1.

When the leader part consists of elastic material and non-elastic material, the structure of the combination is as shown in Fig. 15, where A' is the part of non-elastic material having the width same as the light sensitive material and B' and B" are the part of elastic material protruded from the edges of the part A', overlapping the edges of the flanges to protect the light sensitive material from the light when it is packed.

The modulus of elasticity in tension of the flexible material is more than 200 and that of the non-elastic material is less than 200 measured by the method of JIS Z1702.

The typical non-elastic materials are such which have at least one layer of paper or a biaxial oriented film.

The typical elastic materials are such films made by the method of extrusion, casting or inflation.

The non-elastic materials are capable to prevent the generation of wrinkles when packed and to make the easier hadling when set in the cartridge.

The elastic materials are capable to stick tightly around the edges of the flanges to protect the light sensitive material from the light.

Now, the functions of the package having the above-described constitution for a roll-shaped light sensitive material will be detailed.

In each of sheets 6a provided to the both sides of leader 3, the width thereof is wider than that of light sensitive material 2 and the portion thereof wrapping around the outer circumference of flange 5 is formed into a lateral U-shape as shown by the cross-sectional view appeared in Fig. 3(a). Therefore, any light-leakage can be eliminated at all. Further, the leading edges of sheets 6a are wrapped around the outer circumference of flange 5. Therefore, any snake-like wrapping can also be prevented in packaging.

Sheets 6a are flexible, so that there can be no possibility of any unbalanced tension applied to a web and no wrinkle can also be produced at all.

In addition to the above, the following arrangments are desirable to be made; after completing the packaging shown in Fig. 3, handles 7a are attached with separation, a specific distance so as to make excellent the operations for taking in or taking out from outer package 8; for the purpose of making a buffering property excellent, elastic pads 9a such as those made of foam polyethylene or foam polystyrene are used as shown in Figs. 5 and 6; any physical distribution or storage in the lateral direction can be prevented from damaging in the state shown in Fig. 6 by covering with upper lid 10 as shown in Fig. 6; and, supposing that a physical distribution or storage is carried out in the horizontal direction, both side-protection pads 11 are arranged inside outer package 8 as shown in Fig. 6.

### [Example of experiments of the invention applied to physical distribution]

A 1117mm-width Konica RST scanner film Model RSD-100E having a length of 61m was wrapped around a 2.5mm-thick papermade core having a inner diameter of 71.9mm. One each of flange 5 comprising styrol containing carbon black was fitted in each of the both ends as shown in Fig. 1. Leader 3 laminated with a natural paper, an aluminium foil, nylon or polyethylene film containing carbon black and sheets 6a each formed of a polyethylene film containing carbon black and rubber were each made adhered with adhesive tape 4 as shown in Fig. 1 so as to wrap them around the scanner film as shown in Fig. 3; the resulting wrapped film was further packed into an outer package as shown in Figs. 4 through 6; ten pieces each of the resulting outer packaged rolls were shuttled both ways between Tokyo and Fukuoka and Tokyo and Aomori by small-lot mixed consignment service and they were then allowed to stand for one hour under the exposure to 10000 Lux-light in the state shown in Fig. 3; and the light sensitive materials 2 were developed. It was resultingly proved that any fog produced by a light-leakage was not observed at all and any re-packaging was not necessary at all for remedying a wrinkle or snake-like wrapping.

The packages for roll-shaped light sensitive materials relating to the invention are those each comprising one each of light-proof flanges provided to the both ends of the light sensitive material wrapped in the form of a roll and a light-proof leader provided to the outside of the roll of the light sensitive material, wherein the leader part has a width wider than that of the light sensitive material and the both ends thereof are elastic so as to prevent both of a light-leakage from the edge portions which may be produced when the leader has a narrow width and a wrinkle or snake-like winding which may be produced when the leader part is wound round and, therefore, the leader is neither shifted off when an external force is applied thereto in the state where the flanges and the leader is not connected together, nor destroyed when an external force is applied thereto.

## Claims

1. A roll-shaped package comprising a light sensitive material (2), a core (1) having two ends and around which the light sensitive material is wound, a pair of light-proof flanges (5) each fixed to one end of the core, and a light-proof leader (3, A') attached at the leading end of the wound light sensitive material, wherein each flange has an inside surface perpendicular to the core, an outside surface and an outer circumferential surface, the width of each of the light sensitive material and the leader being such that the wound light sensitive material and the leader are provided between the inside surfaces of the flanges, and the opposite lateral side edges of the wound light sensitive material being covered by the inside surfaces of the flanges, the roll-shaped package further comprising flexible resin sheet film means (6a; B';B") provided on the leader and having a projecting portion projecting from each opposite lateral side of the leader, the width between the projecting lateral sides of the projecting portions of the sheet film being larger than distance between the outside surfaces of the flanges, characterized in that each projecting portion of the sheet film means is wrapped around the respective flange in a U-shaped cross-section so as to cover that portion of the inside surface of the flange not covered by the wound sensitive material, the outer circumferential surface of the flange and a part of the outside surface of the flange, and to maintain the wrapping condition of the roll-shaped package.

2. The roll-shaped package of Claim 1, characterized in that the sheet film means comprise two resin film strips (6a) provided at each respective lateral side of the leader so as to respectively form the projecting portions of the sheet film means.

3. The roll-shaped package of Claim 1, characterized in, that the sheet film means comprise a single resin film sheet (B'; B") having a width larger than the distance between the outside surfaces of the flanges.

4. The roll-shaped package of Claim 1, characterized in that the leader is made of a non-elastic material.

5. The roll-shaped package of Claim 1, characterized in that the leader is non-elastic and has a modulus of elasticity in tension of less than 200, and the resin sheet film means have a modulus of elasticity in tension of more than 200.

## Patentansprüche

1. Rollenförmige Verpackung mit einem lichtempfindlichen Material (2), einem Kern (1) mit zwei Enden, (und) um den das lichtempfindliche Material gewickelt ist, einem Paar jeweils an einem Ende des Kerns befestigter, lichtundurchlässiger Flansche (5) sowie einem am vorderen Ende des aufgewickelten, lichtempfindlichen Materials befestigten, lichtundurchlässigen Vorspann bzw. Vorlauf (3,A'), wobei jeder Flansch eine zum Kern senkrechte Innenfläche, eine Außenfläche sowie eine äußere Umfangsfläche hat, und die Breite sowohl des lichtempfindlichen Materials als auch des Vorspanns so gewählt ist, daß das aufgewickelte, lichtempfindliche Material und der Vorspann zwischen den Innenflächen der Flansche liegen, wobei die entgegengesetzten lateralen Seitenränder des aufgewickelten, lichtempfindlichen Materials von der Innenfläche der Flansche bedeckt sind, und die rollenförmige Verpackung ferner flexible, auf dem Vorspann vorgesehene Harzfilmschichtmittel (6a;B';B") umfaßt und einen vorstehenden Abschnitt aufweist, der von jeder der entgegengesetzten, lateralen Seiten des Vorspanns vorsteht, wobei die Breite zwischen den vorstehenden lateralen Seiten der vorstehenden Abschnitte des Filmschicht(mittels) größer ist als der Abstand zwischen den Außenflächen der Flansche,
dadurch gekennzeichnet, daß
jeder vorstehende Abschnitt der Filmschichtmittel mit U-förmigem Querschnitt um den jeweiligen Flansch geschlagen ist, so daß er denjenigen Abschnitt der Innenfläche des Flanschs, der nicht von dem aufgewickelten, (licht)empfindlichen Material bedeckt ist, die äußere Umfangsfläche des Flanschs sowie einen Teil der Außenfläche des Flanschs bedeckt und den eingepackten bzw. umhüllten Zustand der rollenförmigen Verpackung aufrechterhält.

2. Rollenförmige Verpackung nach Anspruch 1, dadurch gekennzeichnet, daß die Filmschichtmittel zwei an jeder betreffenden lateralen Seite des Vorspanns vorgesehene Harzfilmstreifen (6a) aufweisen, um jeweils die vorstehenden Abschnitte der Filmschichtmittel zu bilden.

3. Rollenförmige Verpackung nach Anspruch 1, dadurch gekennzeichnet, daß die Filmschichtmittel eine einzige Harzfilmschicht (B',B") mit einer Breite umfassen, die größer ist als der Abstand zwischen den Außenflächen der Flansche.

4. Rollenförmige Verpackung nach Anspruch 1, dadurch gekennzeichnet, daß der Vorspann bzw. Vorlauf aus einem nicht elastischen Material hergestellt ist.

5. Rollenförmige Verpackung nach Anspruch 1, dadurch gekennzeichnet, daß der Vorspann bzw. Vorlauf nicht elastisch ist und ein Elastizitätsmodul bei Zug(beanspruchung) von unter 200 aufweist, und die Harzschichtfilmmittel ein Elastizitätsmodul bei Zug(beanspruchung) von über 200 haben.

## Revendications

1. Un emballage en forme de rouleau comprenant un matériau photosensible (2), un noyau de bobine (1) présentant deux extrémités et autour duquel le matériau photosensible est bobiné, deux flasques (5) étanches à la lumière, fixés chacun à une extrémité du noyau de bobine, et une feuille de tête étanche à la lumière (3, A') fixée à l'extrémité de tête du matériau photosensible bobiné, dans lequel chaque flasque présente une surface intérieure perpendiculaire au noyau de bobine, une surface extérieure et une surface circonférentielle extérieure, la largeur de chacun parmi le matériau photosensible et la feuille de tête étant telle que le matériau photosensible et la feuille de tête bobinés soient disposés entre les surfaces intérieures des flasques et les bords de côté latéral opposés du matériau photosensible bobiné étant recouverts par les surfaces intérieures des flasques, l'emballage en forme de rouleau comprenant en outre des moyens de film flexible en feuille de résine (6a; B'; B") prévus sur la feuille de tête et présentant une partie en saillie partant de chaque côté latéral opposé de la feuille de tête, la largeur entre les faces latérales en saillie des parties en saillie du film en feuille étant supérieure à la distance entre les surfaces extérieures des flasques,
caractérisé en ce que
chaque partie en saillie des moyens de film en feuille est enroulée autour du flasque respectif selon une section transversale en forme de U, de façon à recouvrir cette partie de la surface intérieure du flasque qui n'est pas recouverte par le matériau photosensible, la surface circonférentielle extérieure du flasque et une partie de la surface extérieure du flasque, et à maintenir l'état enveloppé de l'emballage en forme de rouleau.

2. L'emballage en forme de rouleau selon la revendication 1, caractérisé en ce que les moyens de film en feuille comportent deux bandes de film de résine (6a) prévues sur chaque face latérale respective de la feuille de tête, de façon à former respectivement les parties en saillies des moyens de film en feuille.

3. L'emballage en forme de rouleau selon la revendication 1, caractérisé en ce que les moyens de film en feuille comportent une feuille unique de film en résine (B'; B") présentant une largeur supérieure à la distance entre les surfaces extérieures des flasques.

4. L'emballage en forme de rouleau selon la revendication 1, caractérisé en ce que la feuille de tête est réalisée en un matériau non élastique.

5. L'emballage en forme de rouleau selon la revendication 1, caractérisé en ce que la feuille de tête est non élastique et présente un module d'élasticité en traction inférieur à 200, et en ce que les moyens de film en feuille de résine ont un module d'élasticité en traction supérieur à 200.
